Europäisches Patentamt

European Patent Office

Office européen des brevets

(19)

(11) Publication number : **0 466 474 A1**

## (12) EUROPEAN PATENT APPLICATION

(21) Application number : **91306255.0**

(22) Date of filing : **10.07.91**

(51) Int. Cl.⁵ : **G01N 21/64**

(30) Priority : **13.07.90 GB 9015471**

(43) Date of publication of application :
**15.01.92 Bulletin 92/03**

(84) Designated Contracting States :
**BE DE DK ES FR IT NL SE**

(71) Applicant : **DOWTY SEALS LIMITED
Ashchurch
Tewkesbury Gloucestershire GL20 8JS (GB)**

(72) Inventor : **Phelps, Alex
224 Wells Road
Malvern, Worcestershire, WR14 4HD (GB)**

(74) Representative : **Hogg, Jeffery Keith et al
Dowty Group Services Limited Arle Court
Cheltenham Gloucestershire, GL51 OTP (GB)**

(54) Identification of materials and products.

(57)    Ultra-violet fluorescent materials are added to a manufacturing base material such as rubber or polymer materials to enable them and products made from them to be identified non-destructively by exposure to ultra-violet radiation. Furthermore, different ultra-violet fluorescent materials can be used in different manufacturing base materials so as to distinguish each by a characteristic colour of fluorescence. The invention is of special benefit with carbon black filled rubber or polymer materials with which coloured dyes cannot be used.

EP 0 466 474 A1

Technical Field

This invention relates to the identification of manufacturing base material, especially rubber or polymer materials, and products made from them. By the term "manufacturing base material" is meant a material which can be worked by moulding or machining to form a product therefrom.

Synthetic elastomeric hydrocarbon based polymers when vulcanised or cross-linked in the so-called 'gum' states, i.e. without the benefit of filler reinforcements, are invariably soft, with poor mechanical properties. To produce materials of adequate performance for general engineering and sealing applications, it is necessary to reinforce such polymers by the incorporation of fine particle size fillers. The most widely used fillers in the manufacture of elastomeric components for engineering applications are carbon blacks. By judicious selection of particular carbon black grades and levels, it is possible to design elastomeric compounds equal to most industrial application requirements.

As an alternative to carbon black filler for hydrocarbon elastomers, there exists a wide range of inorganic products, e.g. silica, silicates, carbonates, sulphates and metal oxides. They all have serious disadvantages when compared with carbon black. All inorganic fillers tend to be hydrophilic and encourage water absorption into the vulcanisates, and invariably exhibit "work softening", i.e. the hardness of the material is reduced on flexing or stretching. Furthermore white vulcanisates of similar mechanical properties are less resilient than the equivalent black reinforced products.

Applications arise where there is a need to distinguish readily between identically shaped components which are intended for use in identical equipment, where a variety of different fluids need to be sealed. Installation of the wrong seal can result in catastrophic failure. A typical safety critical application occurs in hydraulic vehicle brake systems where non-mineral fluids are generally used, but sometimes mineral fluids are used which with unsuitable non-mineral oil resistant seals lead to seal deterioration and brake failure.

Hydrocarbon elastomers with white fillers or vulcanisates can be colour coded by the addition of pigments so as to distinguish between otherwise identical articles such as brake system seals, but as explained above, such elastomers are usually inferior in their mechanical properties to those that employ carbon black fillers.

One object of the present invention is therefore to provide a means for readily distinguishing between identical articles composed of different materials even though the materials may incorporate carbon black filler which would render the use of pigments ineffective.

Furthermore, there can be a problem during assembly of components in identifying whether or not a particular component is present in the assembly. For example, if an elastomeric seal forms part of an assembly, it may be difficult to view the seal when assembled in another component such as a cylinder. Another object of the invention is therefore to provide a means of more readily identifying the presence of such a component.

Disclosure of the Invention

According to the present invention, ultra-violet fluorescent materials are added to a manufacturing base material such as rubber or polymer materials to enable them and products made from them to be identified non-destructively by exposure to ultra-violet radiation. Furthermore, different ultra-violet fluorescent materials can be used in different manufacturing base materials so as to distinguish each by a characteristic colour of fluorescence.

A typical range of black elastomeric compounds that need to be distinguishable are those based on natural rubber, or ethylene propylene Co- and ter-polymers or styrene butadiene copolymers, or acrylonitrile butadiene copolymers. All of these compounds except acrylonitrile copolymers are suitable for use with non-mineral fluids, but natural rubber only in applications where the temperature does not exceed 70°C, styrene butadiene copolymer only in applications up to 90°C, and ethylene propylene co- and ter-polymers only in applications up to 120°C. Acrylonitrile butadiene copolymers on the other hand are only suitable for mineral fluids up to 120°C.

Suitable ultra-violet fluorescent materials include the following classes producing the following colour fluorescence when irradiated with broad band ultra-violet radiation of wavelength in the range 254 - 365mm:

| | |
|---|---|
| Benzoxazole | - blue-white, |
| Naphthalimide | - yellow-green, |
| Amino naphthalimide | - yellow, |
| Methine | - yellow-orange, |
| Rhodamine | - red, |
| Coumarin | - yellow-orange. |

The above listed fluorescent materials can be used in transparent, translucent or white pigmented products at levels that would produce no apparent fluorescence in comparable materials filled with carbon black. It is necessary to increase the levels of added fluorescent materials by several orders of magnitude to achieve the desired effect.

Mode of Carrying Out the Invention

A typical formulation according to the invention would be as follows:

| | |
|---|---|
| Acrylonitrile butadiene copolymer | 100.0 |
| Zinc oxide | 5.0 |
| Stearic acid | 1.0 |
| Carbon black | 50.0 |
| Di octyl phthallate | 10.0 |
| Tetra methyl thiuram disulphide | 1.5 |
| Dithio morpholine | 1.5 |
| Sulphur | 0.3 |
| Benzoxazole 2,2'- (2,5 Thiophenediyl) | 1.5 |
| bis 5- (1,1-dimethylethyl) | 1.0 |

When subjected to low intensity broad band ultra violet radiation this material fluoresces a brilliant blue-white, readily distinguishable from a standard black filled product without the benzoxazole added.

These ultra-violet fluorescent materials can advantageously be added in a batch process, preferably during the initial mixing process. The resulting material can then be identified at all subsequent stages of manufacture by exposure to ultra-violet light.

Further, products such as seals produced from the material can be checked in bulk and subsequently individually and in situ to verify their composition. Inspection in situ can be especially advantageous in confirming the presence of a product in an assembly where it is not readily visible, the general fluorescence of the product when exposed to ultra-violet radiation making its presence conspicuous.

**Claims**

1. A method of identifying a manufacturing base material and a product made from such base material characterised by incorporating in the base material ultra-violet fluorescent material in sufficient quantity to produce a detectable level of fluorescence when exposed to ultra-violet radiation.

2. A method as claimed in claim 1 in which the base material comprises rubber or polymer materials.

3. A method as claimed in claim 1 or 2 in whichthe base material incorporates carbon black filler.

4. A method as claimed in any one of the preceding claims in which the base material is suitable for the manufacture of seals as the product therefrom.

5. A manufacturing base material or a product made from such base material characterised in that the base material incorporates ultra-violet fluorescent material in sufficient quantity to produce a detectable level of fluorescence when exposed to ultra-violet radiation.

6. A base material or a product as claimed in claim 5 in which the base material comprises rubber or polymer materials.

7. A base material or a product as claimed in claim 5 or 6 in which the base material incorporates carbon black filler.

8. A base material or a product as claimed in any one of claims 5 to 7 in which the product is a seal.

9. A method of distinguishing between different manufacturing base materials and products made from such base materials characterised in that each incorporates an ultra-violet fluorescent material in sufficient quantity to produce a detectable level of fluorescence of a different characteristic colour when exposed to ultra-violet radiation.

European Patent
Office

**EUROPEAN SEARCH REPORT**

Application Number

EP 91 30 6255

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 297 973 (SAINT-GOBAIN EMBALLAGE) * whole document * | 1,2,5,6 | G 01 N 21/64 |
| Y | | 3,4,7,8 | |
| Y | IBM-TDB vol. 27, no. 4A, September 1984, page 2240; C.E. DARVEAU et al.: "Ink-Resistant Seal" * whole document * | 3,4,7,8 | |
| X | US-A-4 127 773 (M.A. WEST) * column 3, lines 19-52; column 4, lines 45-47 * | 9 | |
| X | US-A-2 920 202 (T.J. MOTTEN) * column 1, lines 37-45 * | 1,5 | |
| X | US-A-3 912 928 (J.B. RUSH et al.) * column 3, lines 7-11,55-67 * | 1,2,5,6 | |
| Y | | 3,4,7,8 | |
| Y | EP-A-0 320 287 (EAGLE-PICHER IND.,INC.) * abstract; column 3, lines 1-30 * | 3,4,7,8 | TECHNICAL FIELDS SEARCHED (Int. Cl.5) G 01 N C 09 K |

The present search report has been drawn up for all claims

| Place of search | Date of completion of the search | Examiner |
|---|---|---|
| BERLIN | 23-10-1991 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)